# EUROPÄISCHE PATENTSCHRIFT

(11) **EP 3 574 515 B1**
(45) Veröffentlichungstag und Bekanntmachung des Hinweises auf die Patenterteilung: **12.11.2025**
(21) Anmeldenummer: 17811603.4
(22) Anmeldetag: 11.12.2017
(51) Int. Cl.: H01H 9/54

(54) **NIEDERSPANNUNGS-SCHUTZSCHALTGERÄT**
LOW-VOLTAGE CIRCUIT BREAKER DEVICE
DISJONCTEUR BASSE TENSION

(30) Priorität: 25.01.2017 DE 102017101451
(43) Veröffentlichungstag der Anmeldung: 04.12.2019
(73) Patentinhaber: Eaton Intelligent Power Limited, Dublin 4 (IE)
(72) Erfinder: ASKAN, Kenan, 1090 Wien (AT)
(74) Vertreter: Epping - Hermann - Fischer
(86) Internationale Anmeldenummer: PCT/EP2017/082214
(87) Internationale Veröffentlichungsnummer: WO 2018/137833

(56) Entgegenhaltungen:
- WO-A1-2015/028634
- US-A1- 2003 202 296
- US-A1- 2007 121 257
- US-A1- 2011 062 933
- US-B1- 6 459 606

## Beschreibung

Die Erfindung betrifft eine Elektromotoranschlussstrecke gemäß Patentanspruch 1.

Elektrische Installationsumgebungen weisen oftmals induktive oder kapazitive Lasten bzw. Verbraucher auf, welche typischerweise beim Einschalten hohe Ströme ziehen. Dabei treten für kurze Zeiten Ströme auf, welche derart hoch sind, dass, ein der betreffenden Anlage vorgeschalteter, Schutzschalter auslöst und die Anlage abschaltet.

Zum einen ist das Auslösen des betreffenden Schutzschalters ungewollt, da dadurch das Hochfahren der Anlage gestoppt wird, und das Netz wieder in Betrieb genommen werden muss. Andererseits handelt es sich um keine Fehlauslösung m eigentlichen Sinn, da der vom Schutzschalter detektierte Strom tatsächlich hoch genug ist um ein betriebsgemäßes auszulösen zu rechtfertigen. Allerdings dauert der betreffende Zustand in der Regel nur sehr kurz, sodass dabei keine Schädigung der Leitungen zu befürchten ist.

Insbesondere der Betrieb bzw. das Anfahren von Elektromotoren erfordert daher erhebliche Anlagen um diesen sowohl sicher zu betreiben als auch unterbrechungsfrei anfahren zu können.

Es sind Vorrichtungen bekannt, welche dazu vorgesehen und entsprechend ausgebildet sind, um beim Hochfahren bestimmter Arten von Lasten, den Einschaltstrom zu begrenzen. Allerdings sind diese jeweils nur für bestimmte Arten von Lasten vorgesehen. Weithin bekannt und verbreitet ist etwa die Stern-Dreieck-Umschaltung bei bestimmten Arten von Drehstrommaschinen. Andere derartige Vorrichtungen sind speziell für kapazitive oder induktive Lasten ausgebildet.

Die betreffenden Vorrichtungen weisen den Nachteil auf, dass es sich dabei stets um separate Vorrichtungen handelt, welche zusätzlich zu den behördlich vorgeschriebenen Vorrichtungen angeordnet werden müssen, und welche den Installationsaufwand erhöhen. Zudem sind diese an die Verwendung mit bestimmten Lasten gebunden, wodurch eine Vielzahl unterschiedlicher derartiger Vorrichtungen seitens der Hersteller bzw. Händler bereits zu stellen sind.

Die US 2003/202296 A1, die US 2011/062933 A1 und die US 6 459 606 B1 beschreiben jeweils Vorrichtung, welche - zur Begrenzung eines Einschaltstromes - eine Halbleiteranordnung Ein/Aus-schalten. Allerdings handelt es sich dabei um Stromversorgungen für integrierte Geräte oder für eigenstände Steuergeräte. Keines der drei Dokumente beschreibt ein Gerät, welches darüber hinaus auch noch eine Schutzfunktion wahrnehmen kann.

Die US 2007/0121257 A1 beschreibt einen hybriden Schutzschalter mit einer getakteten Strombegrenzung.

Aufgabe der Erfindung ist es daher ein Elektromotoranschlussstrecke der eingangs genannten Art anzugeben, mit welchem die genannten Nachteile vermieden werden können, und welche, ohne weiteres Gerät, das Anlaufen bzw. Einschalten eines Elektromotors unterstützt.

Erfindungsgemäß wird dies durch die Merkmale des Patentanspruches 1 erreicht.

Dadurch kann ohne weiteres Gerät der Anlaufstrom sowohl kapazitiver als auch induktiver Lasten sicher begrenzt werden. Dadurch kann im Wesentlichen beliebig eine kapazitive oder induktive Last, ohne zusätzlichen Schalter, Anlaufstrombegrenzer oder Schutzschalter, lediglich mit einer einzigen Vorrichtung betriebsmäßig eingeschaltet und betrieben werden. Dadurch ist es nicht erforderlich einen separaten, und speziell auf eine bestimmte Lastform abgestimmten Anlaufstrombegrenzer zu verwenden. Dadurch kann der Installationsaufwand und die Komplexität einer elektrischen Installationsanordnung, insbesondere zum Betrieb einer leistungsstarken Last, verringert werden. Dadurch kann die Flexibilität einer Installationsanordnung erhöht werden.

Durch die Verwendung eines gegenständlichen Niederspannungs-Schutzschaltgeräts kann beim Betrieb eines Elektromotors auf sämtlich ansonsten verwendete Gerätschaften verzichtet werden. Lediglich bei einer angestrebten Regelung des Elektromotors wäre ein heute gebräuchlicher Wechselrichter bzw. Inverter vorzusehen. Ansonsten kann auf die bisherige Anordnung jeweils eines separaten Motorschutzschalters und eines Leistungsschalters und einer Schmelzsicherungsanordnung und eines Motorstarters verzichtet werden. Dadurch kann eine Mehrzahl an Geräten durch lediglich ein einziges Gerät ersetzt und derart der Installationsaufwand erheblich gesenkt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform eines gegenständlichen Schaltgeräts in einer schematischen Darstellung;
Fig. 2 eine erste bevorzugte Ausführungsform einer Elektromotoranschlussstrecke als schematische Darstellung;
Fig. 3 eine zweite Ausführungsform eines gegenständlichen Schaltgeräts in einer schematischen Darstellung; und
Fig. 4 eine zweite bevorzugte Ausführungsform einer Elektromotoranschlussstrecke als schematische Darstellung.

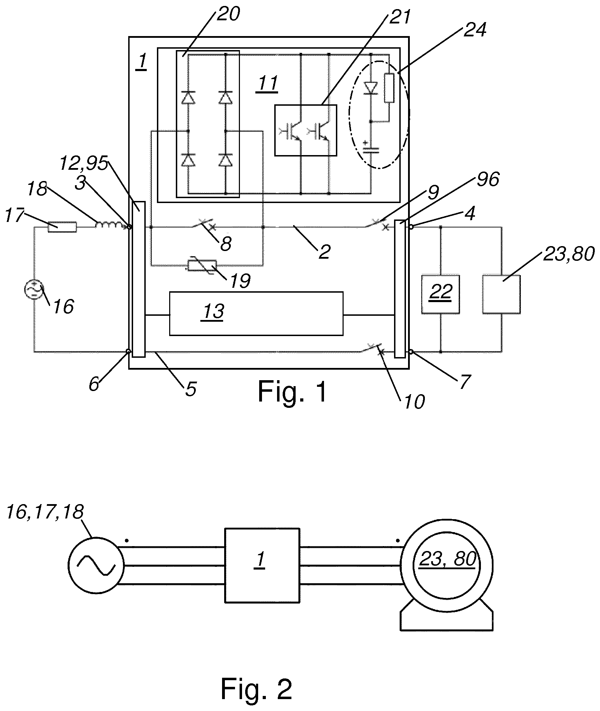

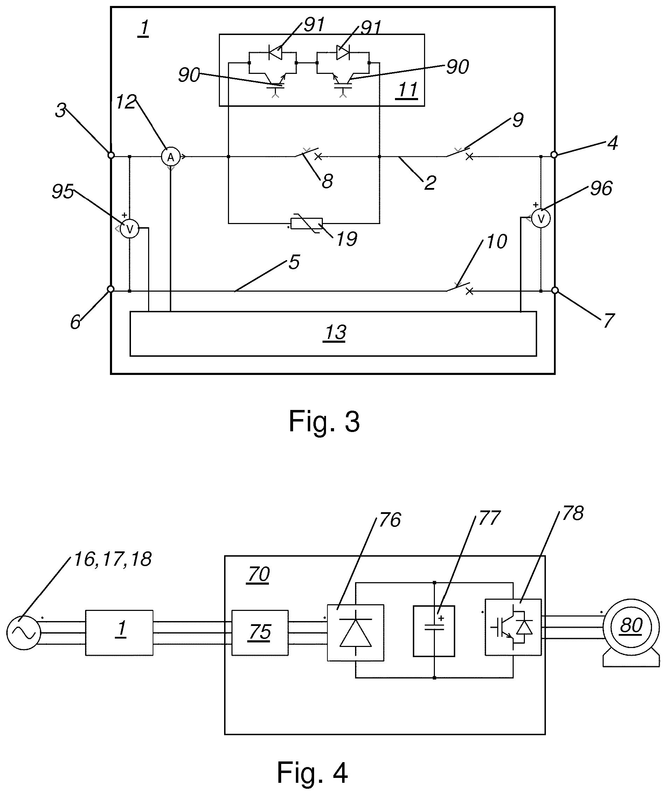

Die Fig. 1 und 3 zeigen jeweils eine Ausführungsform eines Niederspannungs-Schutzschaltgeräts 1, insbesondere Motorschutzschalter, mit mindestens einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 angeordnet ist, wobei eine Halbleiterschaltungsanordnung 11 des Niederspannungs-Schutzschaltgeräts 1 parallel zum Bypassschalter 8 geschaltet ist, wobei wenigstens in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8 und die Halbleiterschaltungsanordnung 11 vorgebbar anzusteuern, wobei die Steuereinheit 13 ausgebildet ist, zur Begrenzung eines Einschaltstromes einer nachgeschalteten Last 23, bei geöffnetem Bypassschalter 8 die Halbleiterschaltanordnung 11 vorgebbar getaktet Ein/Aus zu schalten.

Dadurch kann ohne weiteres Gerät der Anlaufstrom sowohl kapazitiver als auch induktiver Lasten 23 sicher begrenzt werden. Dadurch kann im Wesentlichen beliebig eine kapazitive oder induktive Last 23, ohne zusätzlichen Schalter, Anlaufstrombegrenzer, Vorladeschaltung oder Schutzschalter, lediglich mit einer einzigen Vorrichtung betriebsmäßig eingeschaltet und betrieben werden. Dadurch ist es nicht erforderlich einen separaten, und speziell auf eine bestimmte Lastform abgestimmten Anlaufstrombegrenzer zu verwenden. Dadurch kann der Installationsaufwand und die Komplexität einer elektrischen Installationsanordnung, insbesondere zum Betrieb einer leistungsstarken Last 23, verringert werden. Dadurch kann die Flexibilität einer Installationsanordnung erhöht werden.

Bei dem gegenständlichen Niederspannungs-Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Fig. 1 und 2 zeigen ein gegenständliche Schutzschaltgeräte. Diese weisen wenigstens eine Außenleiterstrecke 2 sowie eine Neutralleiterstrecke 5 auf, wobei auch Ausführungen für Drehstrom, umfassend drei Außenleiterstrecken 2 vorgesehen sind. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein mechanischer Bypassschalter 8 mit einfacher oder mehrfacher Kontaktunterbrechung angeordnet. Bei dem Niederspannungs-Schutzschaltgerät 1 ist bevorzugt und wie dargestellt, in der Außenleiterstrecke 2 weiters ein erster mechanischer Trennschalter 9 seriell zum Bypassschalter 8 angeordnet. In der Neutralleiterstrecke 5 ist ein zweiter mechanischer Trennschalter 10 angeordnet. Parallel zum Bypassschalter 8 ist eine Halbleiterschaltungsanordnung 11 geschaltet. Die Trennschalter 9, 10 können auch an anderer Stelle des Niederspannungs-Schutzschaltgeräts 1 angeordnet werden, sofern damit eine galvanische Trennung der angeschlossenen Last 23 vom netz 16 erreicht wird.

Weiters ist parallel zum Bypassschalter 8 ein Überspannungsableiter 19 geschaltet.

Das Schutzschaltgerät 1 weist weiters eine Strommessanordnung 12 auf, welche in der Außenleiterstrecke 2 angeordnet ist, und welche bevorzugt umfassend einem Shunt-Widerstand oder einem Stromwandler ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die erste Halbleiterschaltungsanordnung 11, sowie den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in Fig. 1 dargestellt.

Die erste Halbleiterschaltungsanordnung 11 weist bevorzugt eine Gleichrichterschaltung 20, welche bevorzugt als Vollbrücke ausgebildet ist, sowie, bei der Ausführungsform gemäß Fig. 1 zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein.

Alternativ hiezu kann auch der Einsatz sog. Back to Back-IGBT 90 als Halbleiterschaltelement vorgesehen sein. Fig. 3 zeigt ein entsprechend ausgebildetes Niederspannungs-Schutzschaltgerät 1. Jedem der Back-IGBT 90 ist eine Antiparalleldiode 91 zugeordnet. Bis auf die Ausführung der Halbleiterschaltungsanordnung 11 sind die beiden Ausführungsformen des Niederspannungs-Schutzschaltgeräts 1 im Wesentlichen identisch.

IGBTs als eigentliche Schaltelemente weisen den Vorteil auf, dass diese hohe Leistungen schalten können, und gegenüber einem Thyristor einfacher abgeschaltet werden können.

Besonders bevorzugt ist vorgesehen, dass die Halbleiterschaltanordnung 3 als bidirektionaler Vierquadrantensteller bzw. Vierquadrantenschaltregler ausgebildet ist. Dadurch ist ein Betrieb unabhängig von der Art der Last möglich. Dadurch kann sowohl das Einschwingverhalten einer kapazitiven wie einer induktiven Last 6 geregelt werden.

In den Fig. 1 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, insbesondere ein Elektromotor 80, sowie ein elektrischer Fehler 22 in Form eines Kurzschlusses dargestellt.

Beim einem Schaltgerät gemäß Fig. 1, ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Das gegenständliche Niederspannungs-Schutzschaltgerät 1 ist dazu vorgesehen, neben der Schutzfunktion, eine, insbesondere kapazitive oder induktive, Last 6 auch betriebsmäßig ein- bzw. auszuschalten. Insbesondere ist vorgesehen das gegenständliche Schutzschaltgerät 1 in Form bzw. anstatt eines Motorschutzschalters zum betriebsmäßigen Betrieb eines Elektromotors 80 zu verwenden.

Es ist daher vorgesehen, dass die Steuereinheit 13 ausgebildet ist, zur Begrenzung eines Einschaltstromes einer nachgeschalteten Last 23, bei geöffnetem Bypassschalter 8 die Halbleiterschaltanordnung 11 vorgebbar getaktet Ein/Aus zu schalten. Die bereits dargelegte Abschaltfunktionen des Niederspannungs-Schutzschaltgeräts 1, vor allem bei Auftreten eines Kurzschlusses, bleibt hiervon unberücksichtigt. Es ist daher bevorzugt vorgesehen, einen Überstrom oder einen Kurzschluss direkt, daher ohne vorherige Begrenzung des Stromes mittels der gegenständlich beschriebenen Methoden zur Einschalstrombegrenzung, auszuschalten bzw. abzuschalten.

Dabei können unterschiedliche Arten der Taktung vorgesehen sein. Insbesondere ist vorgesehen, dass die Steuereinheit 13 ausgebildet ist, die Halbleiterschaltanordnung 11 zufolge einer Pulsweitenmodulation Ein/Aus zu schalten. Dies hat sich hinsichtlich der Praxistauglichkeit als besonders praktikabel herausgestellt.

Bevorzugt ist weiters vorgesehen, dass die Steuereinheit 13 mit der Strommessanordnung 12 verbunden ist, und dass die Steuereinheit 13 ausgebildet ist, die Ein/Aus-Schaltzeiten in Abhängigkeit eines gemessenen Laststromes anzupassen. Dadurch wird ein Regelkreis gebildet, welcher eine genauere Begrenzung des Einschaltstromes ermöglich.

Dabei ist weiters bevorzugt vorgesehen, dass im Bereich der netzseitigen Anschlüsse 3, 6 eine erste Spannungsmessungsanordnung 95 und im Bereich der lastseitigen Anschlüsse 4, 7 eine zweite Spannungsmessungsanordnung 96 angeordnet ist, welche jeweils mit der Steuereinheit 13 verbunden sind. Durch die Spannungsmessung an den netzseitigen Anschlüssen 3, 6 kann der Nulldurchgang der anliegenden Spanung detektiert werden. Durch die Spannungsmessung an den lastseitigen Anschlüsse 4, 7 kann die Spannung an der Last bei der Pulsweitenmodulation gemessen und berücksichtigt werden.

Die Steuereinheit 13 ist selbstverständlich zum vorgebbaren Ansteuern bzw. Durchschalten der Halbleiterschaltanordnung 11 vorgesehen bzw. entsprechend ausgebildet.

Die Fig. 2 und 4 zeigen als weiteren Gegenstand der gegenständlichen Erfindung zwei Ausführungsformen einer Elektromotoranschlussstrecke, wobei an einem Netzanschluss, in den Fig. 2 und 4 jeweils durch die Bezugszeichen 16, 17, 18 bezeichnet, ein gegenständliches Niederspannungs-Schutzschaltgerät 1 angeschlossen ist. An das Niederspannungs-Schutzschaltgerät 1 ist ein Elektromotor 80 angeschlossen.

Durch die Verwendung eines gegenständlichen Niederspannungs-Schutzschaltgeräts 1 kann beim Betrieb eines Elektromotors auf sämtlich ansonsten verwendeten Gerätschaften verzichtet werden. Wie in Fig. 2 dargestellt, besteht die komplette Kette vom Netzanschluss bis zum Elektromotor lediglich aus einem gegenständlichen Niederspannungs-Schutzschaltgerät 1. Gemäß Stand der Technik sind zwischen Netz und Elektromotor 80 typischerweise vier Geräte erforderlich, nämlich jeweils ein separater Motorschutzschalter und ein Leistungsschalter und eine Schmelzsicherungsanordnung und ein Motorstarter. Auf all dies kann bei der gegenständlichen elektrischen Installation eines Elektromotors 80 verzichtet werden.

Lediglich bei einer angestrebten Regelung des Elektromotors wäre ein heute gebräuchlicher Wechselrichter 78 oder aber ein Frequenzumrichter 70 vorzusehen. Ansonsten kann auf die bisherige Anordnung verzichtet werden. Dadurch kann eine Mehrzahl an Geräten durch lediglich ein einziges Gerät ersetzt und derart der Installationsaufwand erheblich gesenkt werden.

Fig. 4 zeigt eine Anordnung, wobei schaltungstechnisch zwischen dem Niederspannungs-Schutzschaltgerät 1 und dem Elektromotor 80 lediglich ein Frequenzumrichter 70 angeordnet ist. Dem Frequenzumrichter 70 ist ein Eingangsfilter 75 zugeordnet. Der Frequenzumrichter 70 selbst besteht dabei aus einem Gleichrichter 76, einer dieser nachgeschalteten Kondensatoranordnung 77, auch Kondensatorbank genannt, und einem dieser nachgeschalteten Wechselrichter 78, welcher auch als DC-AC-Inverter bezeichnet werden kann. Die Kondensatoranordnung 77 ist dabei Teil der Last, wie diese für das Niederspannungs-Schutzschaltgerät 1 erscheint. Durch das vorgebbar getaktete Ein/Aus-Schalten der Halbleiterschaltanordnung 11 kann auch die Vorladung der Kondensatoranordnung 77 erfolgen, sodass diesbezüglich keine weiteren schaltungstechnischen Maßnahmen erforderlich sind, um diese aufzuladen. Selbiges gilt auch für das Eingangsfilter 75, welches Energiespeicher, wie insbesondere Kondensatoren, aufweisen kann, und welches durch das gegenständliche Niederspannungs-Schutzschaltgerät 1 ebenfalls voraufgeladen werden kann, ohne dass dadurch ein erhöhter Einschaltstrom auftritt.

Die Ausführungen zu den Fig. 2 und 4 betreffend die Elektromotoranschlussstrecke sowie die jeweilige Beschreibung soll sich insbesondere auf eine abgeschlossene Aufzählung beziehen. Es ist daher besonders bevorzugt vorgesehen, dass die jeweiligen Elektromotoranschlussstrecken tatsächlich keine weiteren Komponenten aufweisen, wobei als einzige mögliche Ausnahme hiervon Schmelzsicherungen angeführt werden. Jedenfalls sind keine weiteren Schalter vorgesehen.

Nachfolgend wird eine bevorzugte Ausführungsform eines Verfahrens zur Inbetriebnahme einer induktiven oder kapazitiven Last 23 beschrieben, welche Last 23 an ein gegenständliches Niederspannungs-Schutzschaltgerät 1 angeschlossenen ist.

In einem ersten Schritt wird an dem ausgeschalteten Schutzschaltgerät 1 ein Einschaltbedienelement betätigt oder ein Einschaltsignal wird an einer, nicht dargestellten Schnittstelle des Schutzschaltgeräts 1 empfangen.

Nachfolgend wird - bei geöffneten mechanischen Bypassschalter 8 des Niederspannungs-Schutzschaltgeräts 1 - die Halbleiterschaltanordnung 11, welche den geöffneten mechanischen Bypassschalter 8 überbrückt, zur Begrenzung des Einschaltstromes der Last 23, von der Steuereinheit 13 des Niederspannungs-Schutzschaltgeräts 1 vorgebbar getaktet, während jeder Halbwelle des versorgenden Wechselstromes, Ein/Aus-geschaltet.

Bevorzugt ist dabei vorgesehen, dass die Halbleiterschaltanordnung 11 von der Steuereinheit 13 zufolge einer Pulsweitenmodulation Ein/Aus geschalten wird.

Sobald ein im Wesentlichen stabiler Stromfluss bzw. eine im Wesentlichen stabile Leistungsaufnahme über das Niederspannungs-Schutzschaltgerät 1 eingetreten ist, mit anderen Worten, sobald die Leistungsaufnahme der Last 23 eingeschwungen ist, wird die Halbleiterschaltanordnung 11 durch Schließen des mechanischen Bypassschalters 8 überbrückt.

Bevorzugt ist weiters vorgesehen, dass eine Strommessanordnung 12 einen Laststrom durch das Niederspannungs-Schutzschaltgerät 1 misst, und ein Strommessergebnis an die Steuereinheit 13 übermittelt.

## Patentansprüche

1. Elektromotoranschlussstrecke, wobei an einem Netzanschluss ein Niederspannungs-Schutzschaltgerät (1), insbesondere ein Motorschutzschalter, angeschlossen ist, wobei an das Niederspannungs-Schutzschaltgerät (1) ein Elektromotor (80) angeschlossen ist,
wobei das Niederspannungs-Schutzschaltgerät (1) mindestens eine Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1), und eine Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1) aufweist, wobei in der Außenleiterstrecke (2) ein mechanischer Bypassschalter (8) angeordnet ist, wobei eine Halbleiterschaltungsanordnung (11) des Niederspannungs-Schutzschaltgeräts (1) parallel zum Bypassschalter (8) geschaltet ist, wobei wenigstens in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die Halbleiterschaltungsanordnung (11) vorgebbar anzusteuern, wobei die Steuereinheit (13) ausgebildet ist, zur Begrenzung eines Einschaltstromes des nachgeschalteten Elektromotors (80), bei geöffnetem Bypassschalter (8) die Halbleiterschaltanordnung (11) vorgebbar getaktet Ein/Aus zu schalten.

2. Elektromotoranschlussstrecke nach Anspruch 1, **dadurch gekennzeichnet, dass** die Steuereinheit (13) ausgebildet ist, die Halbleiterschaltanordnung (11) vorgebbar, insbesondere zufolge einer Pulsweitenmodulation, Ein/Aus zu schalten.

3. Elektromotoranschlussstrecke nach Anspruch 1 oder 2, **dadurch gekennzeichnet, dass** die Halbleiterschaltanordnung (11) wenigstens einen IGBT (21), insbesondere zwei Back to Back-IGBTs (90), oder wenigstens einen MOSFET als Halbleiterschaltelement aufweist.

4. Elektromotoranschlussstrecke nach einem der Ansprüche 1 bis 3,
**dadurch gekennzeichnet, dass** die Steuereinheit (13) mit der Strommessanordnung (12) verbunden ist, und dass die Steuereinheit (13) ausgebildet ist, die Ein/AusSchaltzeiten in Abhängigkeit eines gemessenen Laststromes anzupassen.

5. Elektromotoranschlussstrecke nach einem der Ansprüche 1 bis 4,
**dadurch gekennzeichnet, dass** die Steuereinheit (13) dazu ausgebildet ist beim Auftreten vorgebbarer elektrischer Zustände, insbesondere einem Überstrom oder Kurzschlussstrom, den Bypassschalter (8) sowie die Halbleiterschaltungsanordnung (11) Abschalten des Niederspannungs-Schutzschaltgerät (1) anzusteuern.

6. Elektromotoranschlussstrecke nach einem der Ansprüche 1 bis 5,
**dadurch gekennzeichnet, dass** die Halbleiterschaltanordnung (11) als bidirektionaler Vierquadrantensteller ausgebildet ist.

7. Elektromotoranschlussstrecke nach einem der Ansprüche 1 bis 6,
**dadurch gekennzeichnet, dass** das Niederspannungs-Schutzschaltgerät (1) mechanische Trennkontakte (9, 10) zur vorgebbaren galvanischen Unterbrechung der Außenleiterstrecke (2) und der Neutralleiterstrecke (5) aufweist.

8. Elektromotoranschlussstrecke nach einem der Ansprüche 1 bis 7,
**dadurch gekennzeichnet, dass** schaltungstechnisch zwischen dem Niederspannungs-Schutzschaltgerät (1) und dem Elektromotor (80), insbesondere lediglich, ein Wechselrichter oder ein Frequenzumrichter (70) angeordnet ist.

## Claims

1. An electric motor connecting line,
wherein a low-voltage circuit breaker device (1), in particular a motor protection switch, is connected to a network terminal,
wherein an electric motor (80) is connected to the low-voltage circuit breaker device (1), wherein the low-voltage circuit breaker device (1) comprises at least one external conductor path (2) from an external conductor supply terminal (3) of the low-voltage circuit breaker device (1) to an external conductor load terminal (4) of the low-voltage circuit breaker device (1), and a neutral conductor path (5) from a neutral conductor terminal (6) of the low-voltage circuit breaker device (1) to a neutral conductor load terminal (7) of the low-voltage circuit breaker device (1),
wherein a mechanical bypass switch (8) is disposed in the external conductor path (2), wherein a semiconductor circuit arrangement (11) of the low-voltage circuit breaker device (1) is coupled in parallel to the bypass switch (8),
wherein at least one current measuring arrangement (12) is disposed in the external conductor path (2), which current measuring arrangement is connected to an electronic control unit (13) of the circuit breaker device (1),
wherein the electronic control unit (13) is configured to control the bypass switch (8) and the semiconductor circuit arrangement (11) in a predeterminable manner,
wherein the control unit (13) is configured to switch on/off the semiconductor circuit arrangement (11) in a predetermined manner when the bypass switch (8) is open to limit an inrush current of the downstream electric motor (80).

2. The electric motor connecting line according to claim 1,
**characterized in that** the control unit (13) is configured to switch on/off the semiconductor circuit arrangement (11) in a predeterminable manner, particularly due to pulse-width modulation.

3. The electric motor connecting line according to claim 1 or 2,
**characterized in that** the semiconductor circuit arrangement (11) comprises at least one IGBT (21), particularly two back-to-back IGBTs (90), or at least one MOSFET as a semiconductor switching element.

4. The electric motor connecting line according to any one of claims 1 to 3,
**characterized in that** the control unit (13) is coupled to the current measuring arrangement (12), and that the control unit (13) is configured to adjust the on/off switching times depending on a measured load current.

5. The electric motor connecting line according to any one of claims 1 to 4,
**characterized in that** the control unit (13) is configured to control the bypass switch (8) and the semiconductor circuit arrangement (11) for switching off the low-voltage circuit breaker device (1) in the event of predetermined electrical conditions, particularly an overcurrent or short-circuit current.

6. The electric motor connecting line according to any one of claims 1 to 5,
**characterized in that** the semiconductor circuit arrangement (11) is configured as a bidirectional four-quadrant chopper.

7. The electric motor connecting line according to any one of claims 1 to 6,
**characterized in that** the low-voltage circuit breaker device (1) comprises mechanical breaker contacts (9, 10) for predetermined galvanic disconnection of the external conductor path (2) and the neutral conductor path (5).

8. The electric motor connecting line according to any one of claims 1 to 7,
**characterized in that** in particular only an inverter or a frequency converter (70) is disposed in terms of circuitry between the low-voltage circuit breaker device (1) and the electric motor (80).

## Revendications

1. Tronçon de raccordement de moteur électrique,
dans lequel un disjoncteur de protection (1) basse tension, en particulier un disjoncteur de protection de moteur, est raccordé à un raccordement au réseau, dans lequel un moteur électrique (80) est raccordé au disjoncteur de protection (1) basse tension,
dans lequel le disjoncteur de protection (1) basse tension présente au moins un tronçon de conducteur externe (2) reliant un raccordement d'alimentation (3) de conducteur externe du disjoncteur de protection (1) basse tension à un raccordement de charge (4) de conducteur externe du disjoncteur de protection (1) basse tension, et un tronçon de conducteur neutre (5) reliant un raccordement de conducteur neutre (6) du disjoncteur de protection (1) basse tension à un raccordement de charge (7) de conducteur neutre du disjoncteur de protection (1) basse tension,
dans lequel un commutateur de dérivation (8) mécanique est disposé dans le tronçon de conducteur externe (2),
dans lequel un agencement commutateur à semi-conducteur (11) du disjoncteur de protection (1) basse tension est connecté en parallèle au commutateur de dérivation (8),
dans lequel un dispositif de mesure de courant (12) est disposé au moins dans le tronçon de conducteur externe (2), lequel est relié à une unité de commande (13) électronique du disjoncteur de protection (1),
dans lequel l'unité de commande (13) électronique est conçue pour commander le commutateur de dérivation (8) et l'agencement commutateur à semi-conducteur (11) de manière pouvant être prédéterminée,
dans lequel l'unité de commande (13) est conçue, pour limiter un courant transitoire du moteur électrique (80) connecté en aval, lorsque le commutateur de dérivation (8) est ouvert, pour commuter l'agencement commutateur à semi-conducteur (11) de manière cadencée et pouvant être prédéterminée entre marche/arrêt.

2. Tronçon de raccordement de moteur électrique selon la revendication 1,
**caractérisé en ce que** l'unité de commande (13) est conçue pour commuter l'agencement commutateur à semi-conducteur (11) de manière pouvant être prédéterminée, en particulier à la suite d'une modulation de largeur d'impulsion, entre marche/arrêt.

3. Tronçon de raccordement de moteur électrique selon la revendication 1 ou 2,
**caractérisé en ce que** l'agencement commutateur à semi-conducteur (11) présente au moins un IGBT (21), en particulier deux IGBT dos à dos (90), ou au moins un MOSFET comme élément de commutation à semi-conducteur.

4. Tronçon de raccordement de moteur électrique selon l'une quelconque des revendications 1 à 3,
**caractérisé en ce que** l'unité de commande (13) est reliée au dispositif de mesure de courant (12), et **en ce que** l'unité de commande (13) est conçue pour ajuster les temps de commutation marche/arrêt en fonction d'un courant de charge mesuré.

5. Tronçon de raccordement de moteur électrique selon l'une quelconque des revendications 1 à 4,
**caractérisé en ce que** l'unité de commande (13) est conçue, en cas d'apparition d'états électriques pouvant être prédéterminés, en particulier d'une surintensité ou d'un court-circuit, pour commander le commutateur de dérivation (8) ainsi que l'agencement commutateur à semi-conducteur (11) pour couper le disjoncteur de protection (1) basse tension.

6. Tronçon de raccordement de moteur électrique selon l'une quelconque des revendications 1 à 5,
**caractérisé en ce que** l'agencement commutateur à semi-conducteur (11) est conçu sous la forme d'un actionneur bidirectionnel à quatre quadrants.

7. Tronçon de raccordement de moteur électrique selon l'une quelconque des revendications 1 à 6,
**caractérisé en ce que** le disjoncteur de protection (1) basse tension présente des sectionneurs (9, 10) mécaniques pour l'interruption galvanique pouvant être prédéterminée du tronçon de conducteur externe (2) et du tronçon de conducteur neutre (5).

8. Tronçon de raccordement de moteur électrique selon l'une quelconque des revendications 1 à 7,
**caractérisé en ce que**, du point de vue de la technique de commutation, un onduleur ou un convertisseur de fréquence (70) est disposé entre le disjoncteur de protection (1) basse tension et le moteur électrique (80), en particulier uniquement.
